# EUROPEAN PATENT APPLICATION

(11) **EP 4 664 103 A1**
(43) Date of publication of application: **17.12.2025**
(21) Application number: 23943441.8
(22) Date of filing: 20.12.2023
(51) Int. Cl.: G01N 23/046

(54) **BATTERY TESTING APPARATUS AND BATTERY PRODUCTION DEVICE**

(30) Priority: 30.06.2023 CN 202321706005 U
(71) Applicant: Contemporary Amperex Technology Co., Limited, Ningde, Fujian 352100 (CN)
(72) Inventor: LIU, Jianlin, Ningde, Fujian 352100 (CN); ZHANG, Fenglin, Ningde, Fujian 352100 (CN); SHI, Zhimeng, Ningde, Fujian 352100 (CN)
(74) Representative: Kraus & Lederer PartGmbB
(86) International application number: PCT/CN2023/140322
(87) International publication number: WO 2025/000968

(57) **Abstract**

A battery testing apparatus and a battery production device, which belong to the technical field of batteries. The battery testing apparatus comprises a ray source, a detector and a carrying mechanism, wherein the carrying mechanism comprises a clamp, the clamp is used for clamping a battery to be tested, rays emitted by the ray source are projected to the detector through said battery clamped by the clamp, and the detector is used for acquiring a testing image of said battery on the basis of the received rays; and a side edge of the surface of the clamp that is used for being in contact with said battery has a chamfer.

## Description

### CROSS-REFERENCE

The present application refers to Chinese Patent Application No. 202321706005.7 entitled "BATTERY DETECTION APPARATUS AND BATTERY PRODUCTION DEVICE" filed on June 30, 2023, which is incorporated herein by reference in its entirety.

### TECHNICAL FIELD

The present application relates to the technical field of batteries, and in particular, to a battery detection apparatus and a battery production device.

### BACKGROUND

Energy conservation and emission reduction are the keys to the sustainable development of the automobile industry. Electric vehicles have become an important part of the sustainable development of the automobile industry due to their energy-saving and environmental protection advantages. For electric vehicles, the battery technology is an important factor in their development.

In the production and manufacturing process of batteries, to prevent quality issues caused by welding defects, pinholes, cracks, and burst points in weld seams that may lead to defective batteries, it is necessary to conduct detections on the batteries. However, current battery detection apparatuses fail to meet the battery detection requirements.

### SUMMARY

The present application aims to solve at least one of the technical problems existing in the background. Therefore, an objective of the present application is to provide a battery detection apparatus and a battery production device to improve the accuracy of battery detection.

Embodiments of a first aspect of the present application provide a battery detection apparatus. The battery detection apparatus includes a radiation source, a detector, and a supporting mechanism. The supporting mechanism includes a clamp, and the clamp is configured to clamp a battery to be detected. Radiation emitted by the radiation source is projected onto the detector through the battery to be detected clamped by the clamp, and the detector is configured to acquire a detection image of the battery to be detected based on received radiation. A side edge of a surface of the clamp configured to be in contact with the battery to be detected is provided with a chamfer.

In the technical solutions of the embodiments of the present application, by providing a chamfer on the side edge of the surface of the clamp, which is disposed on the supporting mechanism and configured to clamp the battery to be detected, where the surface is configured to be in contact with the battery to be detected, residual images in the detection image of the battery to be detected acquired by the detector based on the received radiation can be reduced, thereby improving the accuracy of battery detection.

In some embodiments, the chamfer is an arc chamfer. The arc chamfer has no sharp edges, which is more conducive to the placement of the battery to be detected on the supporting mechanism, thereby improving the efficiency of battery detection.

In some embodiments, a density ρ₁ of a material of the clamp satisfies: 1.5 g/cm³ ≤ ρ₁ ≤ 1.8 g/cm³. This enables the clamp to exhibit good radiolucency, and the good radiolucency of the clamp can reduce the impact on the imaging quality of the battery to be detected, thereby improving the detection accuracy.

In some embodiments, the material of the clamp includes a carbon fiber plate or a high-density sponge. Selecting the carbon fiber plate or the high-density sponge as the material of the clamp not onlyimproves detection accuracybut alsoreduces the production cost of the battery detection apparatus.

In some embodiments, the flat panel detector includes a scintillator layer, and a thickness H0 of the scintillator layer satisfies: 700 µm ≤ H0 ≤ 800 µm. By adjusting the thickness of the scintillator layer of the flat panel detector, the detection capability of the battery detection apparatus is improved, and a thickness range of the battery to be detected that satisfies the density resolution requirements is ensured, thereby improving the accuracy of the detection results of the battery to be detected and enabling detection of batteries to be detected with different specifications, while also taking into account the economic efficiency of battery detection.

In some embodiments, a material of the scintillator layer includes cesium iodide. Cesium iodide is used as the material of the scintillator layer, and the flat panel detector with this structure has relatively small photon loss, resulting in a relatively high quantum detection efficiency of such flat panel detector. Moreover, residual images caused by the clamp on the detection image can be reduced, thereby improving the detection efficiency of the flat panel detector.

In some embodiments, the flat panel detector is an amorphous silicon flat panel detector. Using the amorphous silicon flat panel detector as the flat panel detector of the battery detection apparatus can improve the detection efficiency and imaging quality of the battery detection apparatus.

In some embodiments, a pixel size L2 of the flat panel detector satisfies: L2 > 100 µm. By limiting the pixel size L2 of the flat panel detector, the requirements for the detection precision of the battery to be detected are met, while improving the detection efficiency and accuracy.

In some embodiments, the pixel size L2 of the flat panel detector satisfies: L2 ≤ 140 µm. By further limiting the pixel size L2 of the flat panel detector, the requirements for the detection precision of the battery to be detected can be met, while also further improving the detection efficiency and accuracy.

In some embodiments, a focal spot size L1 of the radiation source satisfies: L1 ≤ 70 µm. The focal spot size L1 of the radiation source is directly related to the image resolution of the battery detection apparatus. The specifically limited focal spot size L1 of the radiation source allows the detection precision of the battery detection apparatus to better match the size of the battery to be detected during detection, thereby improving the detection accuracy and the detection efficiency.

In some embodiments, an operating voltage V0 of the radiation source satisfies: 150 kv ≤ V0 ≤ 300 kv. By limiting the operating voltage V0 of the radiation source, a detection radiation dose that meets the requirements can be provided while ensuring the stability and reliability of the radiation source. In addition, the radiation source and the detector can cooperate to meet the requirements for the detection precision of the battery to be detected with a wider thickness range, thereby improving the detection efficiency and accuracy.

In some embodiments, an operating current I0 of the radiation source satisfies: 800 µA ≤ I0 ≤ 1500 µA. By limiting the operating current I0 of the radiation source, a detection radiation dose that meets the requirements can be provided while ensuring the stability and reliability of the radiation source. In addition, the radiation source and the detector can cooperate to meet the requirements for the detection precision of the battery to be detected with a wider thickness range, thereby improving the detection efficiency and accuracy.

In some embodiments, the battery detection apparatus further includes a moving mechanism and a plurality of detection platforms. Each of the plurality of detection platforms is provided with the radiation source and the detector. The moving mechanism is configured to drive the supporting mechanism to sequentially move to the plurality of detection platforms, the plurality of detection platforms are configured to respectively project an optical axis of the radiation source perpendicularly onto a plurality of target positions on a same surface of the battery to be detected to acquire a plurality of initial images, and the detection image is acquired based on the plurality of initial images. The moving mechanism drives the supporting mechanism to sequentially move to the plurality of detection platforms, the plurality of detection platforms respectively project the optical axis of the radiation source perpendicularly onto the plurality of target positions on the same surface of the battery to be detected to acquire a plurality of initial images, and then the detection image is acquired based on the plurality of initial images, such that the detection image can include more comprehensive information of the battery to be detected, thereby improving the detection accuracy.

In some embodiments, the plurality of target positions include preset positions on two opposite side edges of a surface of the battery to be detected and preset positions in a central area of the battery to be detected. The detection image can include most defect information of the battery to be detected. Therefore, by acquiring the initial images of the preset positions on the two opposite side edges of the surface of the battery to be detected and the preset positions in the central area of the battery to be detected, defect detection on the battery to be detected can be performed, thereby improving the detection efficiency of the battery to be detected.

In some embodiments, the moving mechanism includes a driving member and an annular guide rail. The plurality of detection platforms are spaced apart along the annular guide rail, the supporting mechanism is slidably arranged on the annular guide rail, and the driving member is configured to drive the supporting mechanism to sequentially slide along the annular guide rail to positions corresponding to the plurality of detection platforms. By configuring the plurality of supporting mechanisms to be capable of sequentially moving along the annular guide rail to positions between the radiation source and the detector, the efficiency of detecting the battery to be detected by the battery detection apparatus can be improved.

In some embodiments, the supporting mechanism further includes a supporting platform. The supporting platform is configured to support the battery to be detected, and the density ρ₂ of the material of the supporting platform satisfies: 1.5 g/cm³ ≤ ρ₂ ≤ 1.8 g/cm³. The good radiolucency can reduce the impact on the imaging quality of the battery to be detected, thereby improving the detection accuracy.

In some embodiments, the supporting mechanism further includes a limiting block arranged on the supporting platform, and the limiting block is configured to limit a position of the battery to be detected placed on the supporting platform. By arranging the limiting block on the supporting platform to limit the position of the battery to be detected placed on the supporting platform, the battery to be detected can be more stable during the detection process, thereby improving the detection efficiency and detection accuracy.

In some embodiments, the battery detection apparatus further includes an image processing unit. The image processing unit is configured to identify a defect in the detection image. By identifying the defect in the detection image via the image processing unit, the efficiency of defect detection for the battery to be detected can be improved.

The embodiments of a second aspect of the present application provide a battery production device. The battery production device includes the detection apparatus according to any one of the above embodiments.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

In the drawings, unless otherwise specified, the same reference numerals across multiple drawings indicate the same or similar components or elements. The drawings are not necessarily drawn to scale. It should be understood that the drawings depict only some implementations of the present application and are therefore not to be considered as limiting the scope of the present application. To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts.
FIG. 1 is a schematic structural diagram of a vehicle according to some embodiments of the present application;
FIG. 2 is a schematic diagram of an exploded structure of a battery according to some embodiments of the present application;
FIG. 3 is a schematic diagram of an exploded structure of a battery cell according to some embodiments of the present application;
FIG. 4 is a schematic structural diagram of a battery detection apparatus according to some embodiments of the present application;
FIG. 5 is a schematic structural diagram of a supporting mechanism according to some embodiments of the present application;
FIG. 6 is a schematic structural diagram of a flat panel detector according to some embodiments of the present application;
FIG. 7 is a schematic structural diagram of a battery detection apparatus according to some other embodiments of the present application;
FIG. 8 is a schematic structural diagram of an annular guide rail according to some embodiments of the present application;
FIG. 9 is a schematic structural diagram of a supporting mechanism according to some other embodiments of the present application;
FIG. 10 is a schematic structural diagram of another battery detection apparatus according to some embodiments of the present application;
FIG. 11 is a flowchart of a detection method of a detection apparatus according to some embodiments of the present application; and
FIG. 12 is a schematic diagram of a detection image of a battery to be detected according to some embodiments of the present application.

Description of the reference numerals:
1000: vehicle;
100: battery; 200: controller; 300: motor;
10: case; 11: first part; 12: second part;
20: battery cell; 21: end cover; 21a: electrode terminal; 22: housing; 23: battery cell assembly; 23a: tab;
400: battery detection apparatus; 410: radiation source; 411: radiation; 420: supporting mechanism; 421: clamp; 422: limiting block; 430: detector; 431: scintillator layer; 432: photoelectric conversion layer; 440: battery to be detected; 441: surface of the clamp configured to be in contact with the battery to be detected; 450: detection platform; 460: annular guide rail; 470: image processing unit.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the claimed scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", and "provided with", and any variations thereof in the specification and claims of the present application and the above drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the noted technical features. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skills in the art, the specific meanings of the above terms in the embodiments of the present application can be interpreted according to specific conditions.

At present, judging from the trends in the market, the application of power batteries is becoming increasingly widespread. Power batteries are not only applied in energy storage power systems such as hydropower, thermal power, wind power, and solar power stations, but are also widely applied in electric transportation vehicles such as electric bicycles, electric motorcycles, or electric cars, as well as in military equipment, aerospace, and other fields. With the continuous expansion of the application field of power batteries, the market demand for power batteries is also constantly increasing.

Taking lithium-ion batteries as an example, product safety issues have become a major concern for both users and automobile manufacturers. Therefore, various battery manufacturers need to implement stricter and more comprehensive control over potential defects during the manufacturing process while improving battery production efficiency. During the charging and discharging cycle of lithium batteries, lithium ions are repeatedly deintercalated between cathode and anode electrode plates. However, when lithium ions are deintercalated from the cathode but lack sufficient channels in the anode for intercalation, it can easily lead to lithium-ion accumulation and lithium plating, posing certain product safety risks. If wrinkles are present on the electrode plates, the lithium-ion deintercalation channel may be blocked, which tends to cause lithium accumulation and lithium plating, thereby resulting in safety risks. Therefore, it is necessary to detect wrinkles on the internal electrode plates of batteries to timely identify internal defects of the batteries, and reduce the outflow of defective batteries.

In the related art, to detect internal defects of batteries, destructive disassembly through sampling or relatively inefficient computed tomography (CT) reconstruction is used. While these methods can identify various defects, they are unsuitable for large-scale comprehensive detection, resulting in extremely low detection efficiency.

Based on this, the present application provides a battery detection apparatus. The apparatus utilizes a detector and a radiation source, and is capable of detecting and identifying defects such as electrode plate wrinkles, feed-end corner folds, feed-end double folds, and breakage and overlapping in batteries with different thicknesses. The apparatus is suitable for large-scale batch detection and enables effective monitoring and elimination of batteries with safety risks.

The battery detection apparatus and the battery production device disclosed in the embodiments of the present application can be used in the battery production and manufacturing process, and the detected or produced battery cell can be used in, but is not limited to be used in, electric devices such as vehicles, ships, or aircraft. The power system of the electric device can be composed of the battery cell, the battery, and the like disclosed in the present application.

The embodiments of the present application provide an electric device using a battery as a power source. The electric device may be, but is not limited to, a mobile phone, a tablet, a laptop computer, an electric toy, an electric tool, an electric bicycle, an electric vehicle, a ship, a spacecraft, and the like. The electric toys may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1000 as an example of the electric device according to an embodiment of the present application.

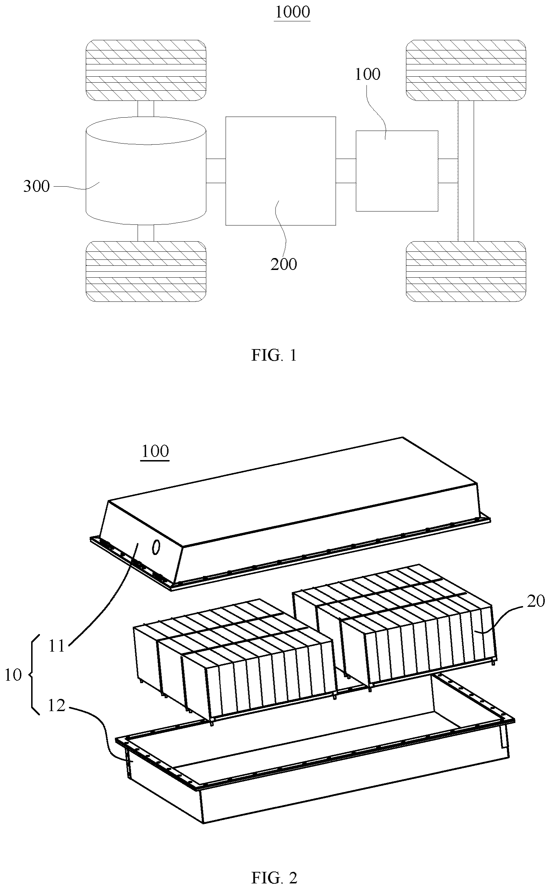

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is provided inside the vehicle 1000, and the battery 100 may be provided at the bottom, head, or tail of the vehicle 1000. The battery 100 may be configured to power the vehicle 1000. For example, the battery 100 may serve as an operation power source of the vehicle 1000. The vehicle 1000 may further include a controller 200 and a motor 300. The controller 200 is used for controlling the battery 100 to power the motor 300, e.g., for operation power needed by the vehicle 1000 for start-up, navigation, and driving.

In some embodiments of the present application, the battery 100 may not only serve as an operation power source for the vehicle 1000, but also as a driving power source for the vehicle 1000 to, instead of or in part instead of fuel or natural gas, provide driving power for the vehicle 1000.

Referring to FIG. 2, FIG. 2 is an exploded view of a battery 100 according to some embodiments of the present application. The battery 100 includes a case 10 and battery cells 20. The battery cells 20 are accommodated in the case 10. The case 10 is configured to provide an accommodating space for the battery cells 20, and the case 10 may be of a variety of structures. In some embodiments, the case 10 may include a first part 11 and a second part 12. The first part 11 and the second part 12 are mutually lidded onto each other, and the first part 11 and the second part 12 jointly define an accommodating space for accommodating the battery cells 20. The second part 12 may be of a hollow structure with one end open, and the first part 11 may be of a plate-like structure. The first part 11 is lidded onto the open side of the second part 12, such that the first part 11 and the second part 12 jointly define the accommodating space. The first part 11 and the second part 12 may also each be of a hollow structure with one side open, and the open side of the first part 11 is lidded onto the open side of the second part 12. Certainly, the case 10 formed by the first part 11 and the second part 12 may be in various shapes, such as a cylindrical shape and a rectangular parallelepiped shape.

In the battery 100, there may be a plurality of battery cells 20, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving electrical connection among the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular parallelepiped-shaped, or in other shapes.

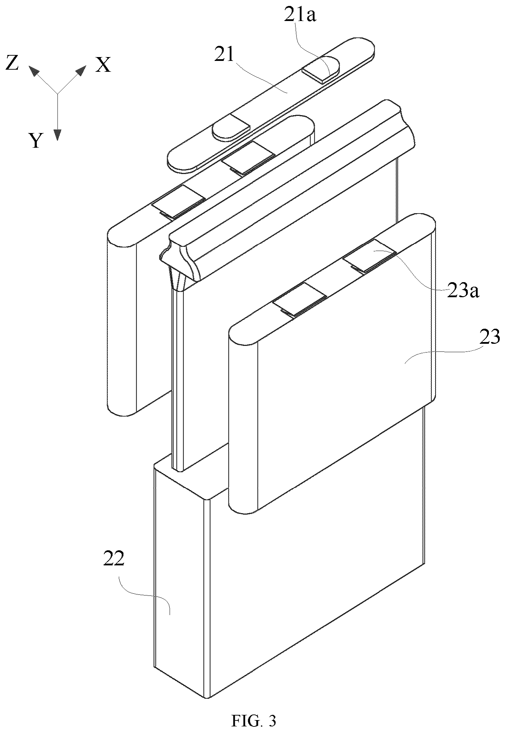

Referring to FIG. 3, FIG. 3 is a schematic diagram of an exploded structure of a battery cell 20 according to some embodiments of the present application. The battery cell 20 refers to the smallest unit forming a battery. As shown in FIG. 3, the battery cell 20 includes an end cover 21, a housing 22, a battery cell assembly 23, and other functional components.

The end cover 21 is a component that is lidded onto the opening of the housing 22 to isolate the internal environment of the battery cell 20 from the external environment. Without limitation, the shape of the end cover 21 may be adapted to the shape of the housing 22 to match the housing 22. In some embodiments, the end cover 21 may be made of a material with a certain hardness and strength (for example, an aluminum alloy), such that the end cover 21 is not easily deformed when being squeezed or collided. This enables the battery cell 20 to have higher structural strength, and the safety performance can also be improved. Functional components, for example, an electrode terminal 21a, may be disposed on the end cover 21. The electrode terminal 21a may be configured to be electrically connected to the battery cell assembly 23 to output or input the electric energy of the battery cell 20. In some embodiments, the end cover 21 may further be provided with a pressure relief mechanism for releasing the internal pressure when the internal pressure or temperature of the battery cell 20 reaches a threshold. The end cover 21 may also be made of various materials, such as copper, iron, aluminum, stainless steel, aluminum alloy, and plastic. In some embodiments, an insulating member may further be arranged on the inner side of the end cover 21, and the insulating member may be configured to isolate an electrical connection component in the housing 22 from the end cover 21 to reduce the risk of a short circuit. Illustratively, the insulating member may be made of plastic, rubber, or the like.

The housing 22 is a component configured to form the internal environment of the battery cell 20 in combination with the end cover 21. The formed internal environment may be used to accommodate the battery cell assembly 23, electrolyte, and other components. The housing 22 and the end cover 21 may be independent components. An opening may be formed in the housing 22, and the end cover 21 is lidded onto the opening to form the internal environment of the battery cell 20. Without limitation, the end cover 21 and the housing 22 may be integrated. Specifically, the end cover 21 and the housing 22 may form a common connection surface before other components are placed in the housing, and when the interior of the housing 22 needs to be encapsulated, the end cover 21 is lidded onto the housing 22. The housing 22 may be in various shapes and sizes, such as a rectangular parallelepiped, a cylinder, and a hexagonal prism. Specifically, the shape of the housing 22 may be determined based on the specific shape and size of the battery cell assembly 23. The housing 22 may be made of various materials, such as copper, iron, aluminum, stainless steel, aluminum alloy, and plastic.

The battery cell assembly 23 is a component where the electrochemical reaction occurs in the battery cell 20. One or more battery cell assemblies 23 may be accommodated in the housing 22. The battery cell assembly 23 is mainly formed by winding or stacking a positive electrode plate and a negative electrode plate, and a separator is generally disposed between the positive electrode plate and the negative electrode plate. The portions of the positive electrode plate and the negative electrode plate that contain active substances constitute the main body part of the battery cell assembly, and the portions of the positive electrode plate and the negative electrode plate that do not contain active substances each constitute a tab 23a. The positive electrode tab and the negative electrode tab may be located together at one end of the main body part or separately at two ends of the main body part. During charging and discharging process of the battery, the positive electrode active substance and the negative electrode active substance react with the electrolyte, and the tabs 23a are connected to the electrode terminals to form a current circuit.

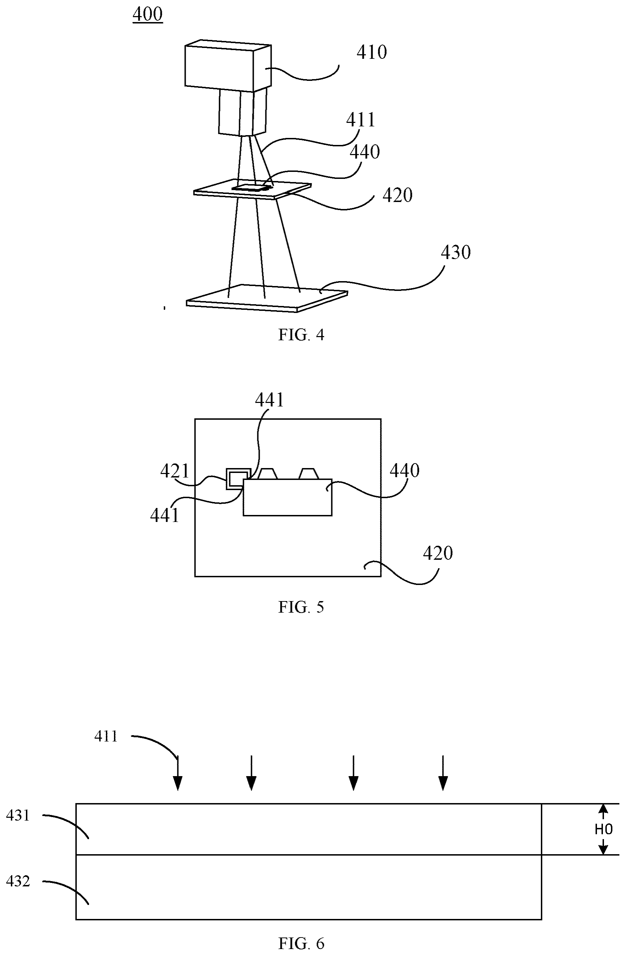

FIG. 4 is a schematic structural diagram of a battery detection apparatus 400 according to some embodiments of the present application. As shown in FIG. 4, the battery detection apparatus 400 includes a radiation source 410, a detector 430, and a supporting mechanism 420. The supporting mechanism 420 includes a clamp 421, and the clamp 421 is configured to clamp a battery 440 to be detected. Radiation emitted by the radiation source 410 is projected onto the detector 430 through the battery 440 to be detected clamped by the clamp 421, and the detector 430 is configured to acquire a detection image of the battery 440 to be detected based on received radiation. A side edge of a surface 441 of the clamp 421 configured to be in contact with the battery 440 to be detected is provided with a chamfer.

In some embodiments of the present application, the radiation source 410 is an apparatus configured to emit radiation 411, and mainly includes a radiation tube and a corresponding power supply. The radiation may be an X-ray, or may be other rays. The radiation source 410 can emit a corresponding ray, e.g., an X-ray or a γ-ray. The radiation source 410 may be open (an open tube) or may be closed (a closed tube). In one example, the radiation source 410 is an X-ray source, and the radiation 411 emitted by the radiation source is an X-ray. When the radiation 411 emitted by the radiation source 410 penetrates through the battery 440 to be detected, due to the difference in the materials of the cathode and anode electrode plates inside the battery 440 to be detected (the anode surface is made of carbon powder, which has weak absorption of the radiation; the cathode surface is made of a lithium-ion material, which has strong absorption of the radiation), and further due to the fact that materials with different thicknesses exhibit different absorption rates for the radiation 411, and a thicker material exhibits greater absorption amount of the radiation 411, the detection image of the battery 440 to be detected acquired by the flat panel detector 430 after receiving the radiation 411 penetrating through the battery 440 to be detected may exhibit various defects of the battery 440 to be detected. Accordingly, defect detection for the battery 440 to be detected can be performed through the detection image of the battery 440 to be detected.

In some embodiments of the present application, the detector 430 may be a flat panel detector or a line array detector. The flat panel detector is an area array detector capable of directly imaging the incident radiation 411. The line array detector is a linear image sensor. A pixel row of the image sensor is perpendicular to the movement direction of an object to be detected, thereby achieving high-speed and high-resolution image acquisition. The detector 430 can convert the energy of the received radiation 411 into recordable electrical signals. By measuring the amount of radiation received by the detector 430, electrical signals proportional to the amount of radiation are generated, thereby forming a corresponding detection image. Illustratively, the detector 430 may include three parts: a radiation conversion module, a photoelectric conversion module, and a signal readout and transmission module. During the detection process of the battery 440 to be detected by the battery detection apparatus 400, the battery 440 to be detected is placed within the radiation area of the radiation source 410, and the radiation 411 emitted by the radiation source 410 is emitted from the radiation window. The emitted radiation 411 penetrates through the battery 440 to be detected and then is projected onto the detector 430, the detector 430 receives the radiation 411 penetrating through the battery 440 to be detected, and the detector 430 acquires the detection image of the battery 440 to be detected based on the received radiation 411.

In some embodiments of the present application, the supporting mechanism 420 may be any supporting structure, such as a tray or a clamping jaw, and can fix the battery 440 to be detected in a supporting or clamping manner. The supporting mechanism 420 may be fixed or movable, e.g., a tray or a clamping mechanism that is provided with a conveying track and moves along the conveying track. The number of the battery 440 to be detected supported on the supporting mechanism 420 may be one or more. In one example, the supporting mechanism 420 may include a plurality of trays, and each tray is configured to support one or more batteries 440 to be detected. The battery 440 to be detected may be the battery cell 20 in the above embodiments, or may be the battery 100 including a plurality of battery cells 20.

FIG. 5 is a schematic structural diagram of a supporting mechanism 420 according to some embodiments of the present application. As shown in FIG. 5, the supporting mechanism 420 includes a clamp 421 configured to clamp a battery 440 to be detected. When the battery detection apparatus 400 detects the battery 440 to be detected, the radiation emitted by the radiation source 410 may be projected onto the detector 430 through the clamp 421 and the battery 440 to be detected clamped by the clamp 421. In the case that the dose of the radiation 411 emitted by the radiation source 410 is constant, the dose of the radiation 411 received by the detector 430 varies when the radiation is projected onto the detector 430 through the supporting mechanism 420, projected onto the detector 430 through the battery 440 to be detected, and projected onto the detector 430 through the clamp 421. The projection with dose differences causes different regions of the detector 430 to respond differently to the radiation 411, which may easily result in residual images in the detection image, particularly in the image of the part of the clamp 421 configured to be in contact with the battery 440 to be detected. Consequently, misjudgment may easily occur during defect detection of the battery. When the side edge of the surface 441 of the clamp 421 configured to be in contact with the battery 440 to be detected is provided with a chamfer, the possibility of residual images being formed on the side edge of the surface 441 of the clamp 421 configured to be in contact with the battery 440 to be detected in the detection image can be reduced, thereby improving the accuracy of battery detection.

According to the embodiments of the present application, by providing a chamfer on the side edge of the surface 441 of the clamp 421, which is disposed on the supporting mechanism 420 and configured to clamp the battery 440 to be detected, where the surface is configured to be in contact with the battery 440 to be detected, residual images in the detection image of the battery 440 to be detected acquired by the detector 430 based on the received radiation 411 can be reduced, thereby improving the accuracy of battery detection.

According to some embodiments of the present application, the chamfer is an arc chamfer.

**In** some embodiments of the present application, the arc chamfer has no sharp edges, which is more conducive to the placement of the battery 440 to be detected on the supporting mechanism 420, thereby improving the efficiency of battery detection.

According to some embodiments of the present application, the density ρ₁ of the material of the clamp 421 satisfies: 1.5 grams per cubic centimeter (g/cm³) ≤ ρ₁ ≤ 1.8 g/cm³.

According to the embodiments of the present application, the density ρ₁ of the material of the clamp 421 satisfies: 1.5 g/cm³ ≤ ρ₁ ≤ 1.8 g/cm³, enabling the material of the clamp 421 to exhibit good radiolucency. The good radiolucency of the clamp 421 can reduce the impact on the imaging quality of the battery 440 to be detected, thereby improving the detection accuracy.

According to some embodiments of the present application, the material of the clamp 421 includes a carbon fiber plate or a high-density sponge.

In some embodiments of the present application, the carbon fiber plate exhibits good radiolucency as well as good durability and corrosion resistance. The high-density sponge exhibits good radiolucency, light weight, and good flexibility. Moreover, both the carbon fiber plate and the high-density sponge are relatively readily available materials.

According to the embodiments of the present application, selecting the carbon fiber plate or the high-density sponge as the material of the clamp 421 not onlyimproves detection accuracybut alsoreduces the production cost of the battery detection apparatus 400.

FIG. 6 is a schematic structural diagram of a flat panel detector according to some embodiments of the present application. As shown in FIG. 6, the flat panel detector includes a scintillator layer 431, and the thickness H0 of the scintillator layer 431 satisfies: 700 microns (µm) ≤ H0 ≤ 800 µm.

In some embodiments of the present application, the flat panel detector is a two-dimensional flat panel detector. The flat panel detector may be an indirect flat panel detector. Illustratively, the flat panel detector may include three parts: a radiation conversion module, a photoelectric conversion module, and a signal readout and transmission module. The radiation conversion module is configured to convert the received radiation 411 into an optical signal, the photoelectric conversion module is configured to convert the optical signal into an electrical signal, and the signal readout and transmission module is configured to form a corresponding image based on the electrical signal.

In some embodiments of the present application, the scintillator layer 431 may be a film layer structure stacked in the thickness direction of the flat panel detector. The scintillator layer 431 is a scintillator material layer having a uniform thickness disposed on the surface on the side facing the radiation source 410. The radiation 411 attenuated after penetrating through the battery 440 to be detected can be received and converted into visible light.

In some embodiments of the present application, the thickness H0 of the scintillator layer 431 refers to a thickness along the thickness direction of the flat panel detector 430. It can be understood that, in consideration of factors such as manufacturing precision, values of the thickness H0 of the scintillator layer 431 at different positions may be different. In this case, the thickness H0 of the scintillator layer 431 at any position can satisfy: 700 µm ≤ H0 ≤ 800 µm.

In some embodiments of the present application, increasing the thickness of the scintillator layer 431 can improve the conversion efficiency for the radiation 411. Under the same radiation dose, the flat panel detector 430 with the scintillator layer 431 having a larger thickness generates more photon signals through conversion, thereby resulting in a more pronounced grayscale value difference for the battery 440 to be detected. When the thickness of the battery 440 to be detected is further increased, the thickness of the scintillator layer 431 of the flat panel detector can be increased. This reduces the density resolution of the flat panel detector, thereby satisfying the density resolution requirements for detecting ultra-thick batteries 440 to be detected.

In the embodiments of the present application, by adjusting the thickness of the scintillator layer 431 of the flat panel detector, the detection capability of the battery detection apparatus 400 is improved, and the thickness range of the battery 440 to be detected that satisfies the density resolution requirements is ensured, thereby improving the accuracy of the detection results of the battery 440 to be detected and enabling detection of batteries 440 to be detected with different specifications, while also taking into account the economic efficiency of battery detection.

According to some embodiments of the present application, the material of the scintillator layer 431 includes cesium iodide.

In some embodiments of the present application, the flat panel detector is an indirect flat panel detector. The flat panel detector may include a photoelectric conversion layer 432 and a scintillator layer 431 that are sequentially stacked on a substrate. The scintillator layer 431 is disposed on the surface on the side facing the radiation source 410, such that the radiation 411 penetrating through the battery 440 to be detected can be received and visible photons can be generated. Cesium iodide is an inorganic scintillation crystal and is capable of absorbing radiation energy and emitting fluorescent photons. It has the advantages of high radiation detection efficiency and high luminous efficiency. In addition, the emission spectrum is well matched to silicon photodiodes. Due to its higher sensitivity, cesium iodide allows for the use of a lower radiation dose, resulting in relatively higher safety.

In the embodiments of the present application, cesium iodide is used as the material of the scintillator layer 431, and the flat panel detector with this structure has relatively small photon loss, resulting in a relatively high quantum detection efficiency of such flat panel detector 430. Moreover, residual images caused by the clamp 421 on the detection image can be reduced, thereby improving the detection efficiency of the flat panel detector 430.

According to some embodiments of the present application, the flat panel detector is an amorphous silicon flat panel detector.

In some embodiments of the present application, the amorphous silicon flat panel detector adopts indirect digital radiography. Its basic structure includes a layer of scintillator material (cesium iodide or sulfur oxidation) on the surface, a photodiode circuit made of amorphous silicon disposed underneath, and a charge readout circuit as the bottom layer. The scintillator located on the surface of the amorphous silicon flat panel detector converts the radiation into visible light. The amorphous silicon photodiode array beneath the scintillator then converts the visible light into electrical signals. Storage charges are formed on the capacitor of the photodiodes, and the amount of storage charges of each pixel is proportional to the intensity of the incident X-ray. Under the action of the control circuit, the storage charges of each pixel are scanned and read out, converted into digital signals after A/D conversion, and then transmitted to a computer for image processing to form a digital radiographic image.

In the embodiments of the present application, the amorphous silicon flat panel detector exhibits high conversion efficiency, wide dynamic range, and strong dose tolerance. Therefore, using the amorphous silicon flat panel detector as the flat panel detector of the battery detection apparatus 400 can improve the detection efficiency and imaging quality of the battery detection apparatus 400.

According to some embodiments of the present application, the pixel size L2 of the flat panel detector satisfies: L2 > 100 µm.

In some embodiments of the present application, when the pixel size L2 of the flat panel detector is excessively small, the amount of incident light received by a single pixel decreases, resulting in a weaker received signal. Moreover, the signals between the pixels of the flat panel detector interfere with each other, thereby reducing the signal-to-noise ratio of the detection image produced by the flat panel detector. Therefore, the pixel size L2 of the flat panel detector cannot be excessively small.

In the embodiments of the present application, by limiting the pixel size L2 of the flat panel detector, the requirements for the detection precision of the battery 440 to be detected are met, while improving the detection efficiency and accuracy.

According to some embodiments of the present application, the pixel size L2 of the flat panel detector satisfies: L2 ≤ 140 µm.

In some embodiments of the present application, the resolution of the flat panel detector is determined by the pixel size L2 of the flat panel detector. The smaller the pixel size L2 of the flat panel detector, the higher the resolution of the flat panel detector; conversely, the larger the pixel size L2 of the flat panel detector, the lower the resolution of the flat panel detector.

In the embodiments of the present application, by further limiting the pixel size L2 of the flat panel detector, the requirements for the detection precision of the battery 440 to be detected can be met, while also further improving the detection efficiency and accuracy.

According to some embodiments of the present application, the focal spot size L1 of the radiation source 410 satisfies: L1 ≤ 70 µm.

In some embodiments of the present application, the radiation 411 emitted by the radiation source 410 is in a cone beam shape, and the radiation source 410 has a certain focal spot size L1 and cannot be equivalent to a point light source. Therefore, when the battery detection apparatus 400 is used to perform the defect detection on the battery 440 to be detected, the imaging end of the battery 440 to be detected may be affected by the focal spot size L1 of the radiation source 410. The larger the focal spot size L1 of the radiation source 410, the less clear the detection image of the battery 440 to be detected. The size of the defect in the battery 440 to be detected is generally relatively small, and the defect with a smaller size is more sensitive to blurring. Using a radiation source 410 with a smaller focal spot size L1 is more conducive to defect identification.

In some embodiments of the present application, the focal spot size L1 of the radiation source 410 refers to the size of the focal spot in a certain direction parallel to the plane where the focal spot is located. Under identical conditions, a smaller focal spot results in higher resolution and better imaging quality. Common methods for measuring the focal spot size of the radiation source 410 are classified into a direct method and an indirect method. The direct method refers to directly observing the shape and size of the focal spot, such as the pinhole method. The indirect method refers to calculating the focal spot size by observing a point spread function or a line spread function caused by the focal spot size L1, and includes the knife-edge method, the slit method, and the spherical target method. The detection can also be performed with reference to methods specified in relevant measurement standards, such as the measurement methods listed in GB/T26834-2011.

Illustratively, when the focal spot of the radiation source 410 is circular, the focal spot size L1 of the radiation source 410 may be the diameter of the focal spot of the radiation source 410.

According to the embodiments of the present application, the focal spot size L1 of the radiation source 410 is directly related to the image resolution of the battery detection apparatus 400. The specifically limited focal spot size L1 of the radiation source 410 allows the detection precision of the battery detection apparatus 400 to better match the size of the battery 440 to be detected during detection, thereby improving the detection accuracy and the detection efficiency.

According to some embodiments of the present application, the operating voltage V0 of the radiation source 410 satisfies: 150 kilovolts (kv) ≤ V0 ≤ 300 kv.

In some embodiments of the present application, the maximum photon energy of the radiation emitted by the radiation source 410 is equal to the energy acquired by incident electrons in the acceleration electric field of the radiation tube, i.e., electron charge multiplied by the acceleration electric field. The acceleration electric field is the magnitude of the tube voltage, that is, the magnitude of the operating voltage V0 of the radiation source 410. A higher operating voltage V0 generates X-rays with higher energy, shorter wavelength, and greater penetration capability through substances. However, excessively high operating voltage V0 of the radiation source 410 may also lead to an excessively large focal spot size of the radiation source 410, thereby reducing the resolution of the detector 430, which is unfavorable for subsequent image identification and defect determination.

In the embodiments of the present application, via the operating voltage V0 of the radiation source 410, a detection radiation dose that meets the requirements can be provided while ensuring the stability and reliability of the radiation source 410. In addition, the radiation source 410 and the detector can cooperate to meet the requirements for the detection precision of the battery 440 to be detected with a wider thickness range, thereby improving the detection efficiency and accuracy.

According to some embodiments of the present application, the operating current I0 of the radiation source 410 satisfies: 800 microamperes (µA) ≤ I0 ≤ 1500 µA.

In some embodiments of the present application, a higher operating current I0 of the radiation source 410 leads to more high-speed electrons bombarding the target per unit time and greater amount of radiation 411 emitted by the radiation source 410. This is equivalent to an increase in the dose of the radiation 411 for a certain area, resulting in an increase in the brightness of the corresponding image. However, excessively high operating current I0 of the radiation source 410 may also lead to an excessively large focal spot size of the radiation source 410, thereby reducing the resolution of the detector 430, which is unfavorable for subsequent image identification and defect determination.

In the embodiments of the present application, by limiting the operating current I0 of the radiation source 410, a detection radiation dose that meets the requirements can be provided while ensuring the stability and reliability of the radiation source 410. In addition, the radiation source 410 and the detector 430 can cooperate to meet the requirements for the detection precision of the battery 440 to be detected with a wider thickness range, thereby improving the detection efficiency and accuracy.

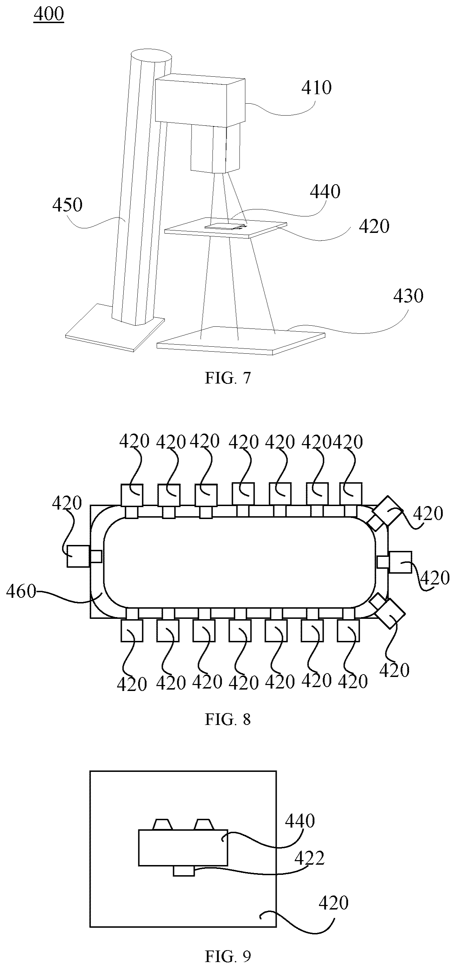

According to some embodiments of the present application, the battery detection apparatus 400 further includes a moving mechanism and a plurality of detection platforms. FIG. 7 is a schematic structural diagram of a battery detection apparatus according to some other embodiments of the present application. As shown in FIG. 7, each detection platform 450 is provided with a radiation source 410 and a detector 430. The moving mechanism is configured to drive the supporting mechanism 420 to sequentially move to the plurality of detection platforms 450, the plurality of detection platforms 450 are configured to respectively project the optical axis of the radiation source 410 perpendicularly onto a plurality of target positions on the same surface of the battery 440 to be detected to acquire a plurality of initial images, and the detection image is acquired based on the plurality of initial images.

In some embodiments of the present application, the moving mechanism may be a linear guide rail, an annular guide rail, or the like, any of which is capable of driving the supporting mechanism 420 to sequentially move to the detection platform.

In some embodiments of the present application, due to size limitation of the detector 430, the detection image of the battery 440 to be detected acquired by the detector 430 on one detection platform 450 based on the received radiation 411 can only include partial defect information of the battery 440 to be detected. Therefore, to acquire complete defect information of the battery 440 to be detected, the optical axis of the radiation source 410 can be respectively projected perpendicularly onto a plurality of target positions on the same surface of the battery 440 to be detected to acquire a plurality of initial images, and then the detection image is acquired based on the plurality of initial images. Illustratively, for an existing wrinkle detection requirement, a spatial resolution of 65 µm is required, where resolution = pixel size/magnification. However, since the size of the detector 430 is limited by the existing manufacturing process, one detection platform 450 can only accommodate a battery 440 to be detected having a length (referring to the longest side of the battery 440 to be detected) of not more than 200 millimeters (mm). When the length of the battery 440 to be detected exceeds a certain size, two detection platforms 450 are used to capture left and right images of the battery 440 to be detected, such that complete wrinkle information of the battery 440 to be detected can be acquired.

According to the embodiments of the present application, the moving mechanism drives the supporting mechanism 420 to sequentially move to a plurality of detection platforms 450, the plurality of detection platforms 450 respectively project the optical axis of the radiation source 410 perpendicularly onto a plurality of target positions on the same surface of the battery 440 to be detected to acquire a plurality of initial images, and then the detection image is acquired based on the plurality of initial images, such that the detection image can include more comprehensive information of the battery 440 to be detected, thereby improving the detection accuracy.

According to some embodiments of the present application, the plurality of target positions include preset positions on two opposite side edges of the surface of the battery 440 to be detected and preset positions in the central area of the battery 440 to be detected.

In some embodiments of the present application, the defect information of the battery 440 to be detected is generally located in positions in the central area of the battery 440 to be detected and positions on two opposite side edges of the surface of the battery 440 to be detected. When the moving mechanism drives the supporting mechanism 420 to sequentially move to the plurality of detection platforms, the plurality of detection platforms respectively project the optical axis of the radiation source 410 perpendicularly onto the preset positions on the two opposite side edges of the surface and the preset positions in the central area of the battery 440 to be detected to acquire a plurality of initial images, and then the detection image is acquired based on the plurality of initial images. The detection image can include most defect information of the battery 440 to be detected. Therefore, by acquiring the initial images of the preset positions on the two opposite side edges of the surface of the battery 440 to be detected and the preset positions in the central area of the battery 440 to be detected, defect detection on the battery 440 to be detected can be performed, thereby improving the detection efficiency of the battery 440 to be detected.

FIG. 8 is a schematic structural diagram of an annular guide rail according to some embodiments of the present application. As shown in FIG. 8, the moving mechanism includes a driving member and an annular guide rail 460. The plurality of detection platforms 450 are spaced apart along the annular guide rail 460, the supporting mechanism 420 is slidably arranged on the annular guide rail, and the driving member is configured to drive the supporting mechanism 420 to sequentially slide along the annular guide rail to positions corresponding to the plurality of detection platforms 450.

In some embodiments of the present application, the driving member may be a motor. The plurality of detection platforms 450 may be equally spaced apart along the annular guide rail 460. The supporting mechanism 420 can move along the annular guide rail 460, and sequentially move to positions between the radiation source 410 and the detector 430, i.e., driving the battery 440 to be detected to move to positions between the radiation source 410 and the detector 430.

In some embodiments of the present application, the supporting mechanism 420 may be fixedly arranged on the annular guide rail 460, or may be movably arranged on the annular guide rail 460.

In the embodiments of the present application, by configuring the plurality of supporting mechanisms 420 to be capable of sequentially moving along the annular guide rail to positions between the radiation source 410 and the detector 430, the efficiency of detecting the battery 440 to be detected by the battery detection apparatus 400 can be improved.

According to some embodiments of the present application, the supporting mechanism 420 further includes a supporting platform. The supporting platform is configured to support the battery 440 to be detected, and the density ρ₂ of the material of the supporting platform satisfies: 1.5 g/cm³ ≤ ρ₂ ≤ 1.8 g/cm³.

In some embodiments of the present application, when the density ρ₂ of the material of the supporting platform satisfies: 1.5 g/cm³ ≤ ρ₂ ≤ 1.8 g/cm³, the material of the supporting platform may include, for example, carbon fiber. The supporting platform may be a carbon fiber plate formed by impregnating carbon fibers arranged in the same direction with resin and then curing, exhibiting advantages including low density, good radiolucency, light weight, good flexibility, high durability, and corrosion resistance. The good radiolucency can reduce the impact on the imaging quality of the battery 440 to be detected, thereby improving the detection accuracy.

FIG. 9 is a schematic structural diagram of a supporting mechanism 420 according to some other embodiments of the present application. As shown in FIG. 9, the supporting mechanism 420 further includes a limiting block 422 arranged on the supporting platform, and the limiting block 422 is configured to limit the position of the battery 440 to be detected placed on the supporting platform.

In some embodiments of the present application, the position and size of the limiting block 422 may be fixed. The position of the limiting block 422 may also be adjustable, and the size of the limiting block 422 may also be adjustable. When batteries 440 to be detected of different models are tested, the position and size of the limiting block 422 can be adjusted to adapt to various models of the batteries 440 to be detected.

In the embodiments of the present application, by arranging the limiting block 422 on the supporting platform to limit the position of the battery 440 to be detected placed on the supporting platform, the battery 440 to be detected can be more stable during the detection process, thereby improving the detection efficiency and detection accuracy.

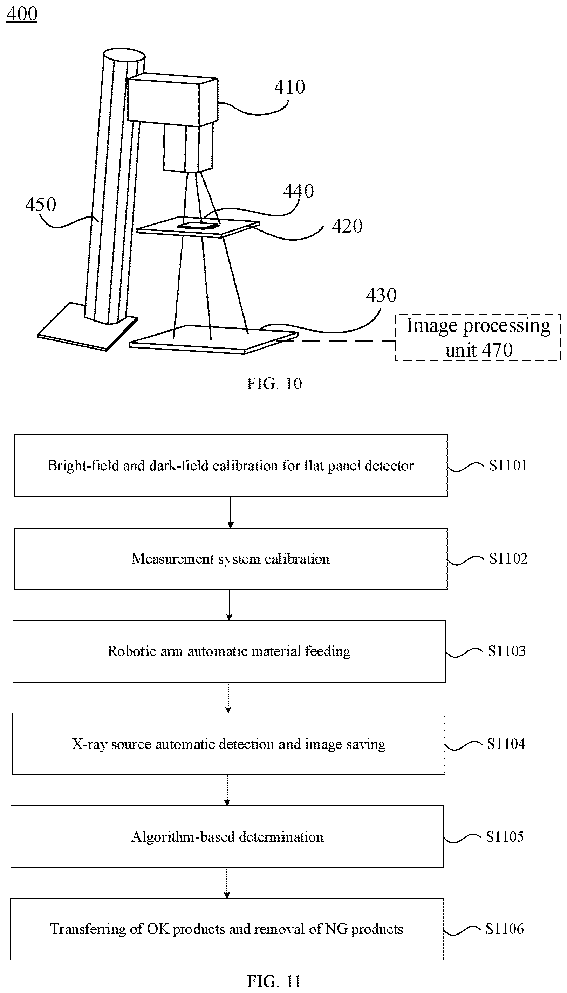

FIG. 10 is a schematic structural diagram of another battery detection apparatus according to some embodiments of the present application. As shown in FIG. 10, the battery detection apparatus 400 further includes an image processing unit 470, and the image processing unit 470 is configured to identify a defect in the detection image.

In some embodiments of the present application, the image processing unit 470 may be an intelligent terminal such as a PC, a tablet computer, or a mobile terminal configured to perform defect detection on the battery 440 to be detected, or may be a server configured to perform defect detection on the battery 440 to be detected. The server may be a local server or a cloud server, which is not specifically limited in the embodiments of the present application.

The image processing unit 470 may be connected to the detector 430 via a wired connection, or the image processing unit 470 may be wirelessly connected to the detector 430. After the detector 430 acquires the detection image of the battery 440 to be detected, the detector 430 transmits the detection image of the battery 440 to be detected to the image processing unit 470, and the image processing unit 470 can perform defect detection on the battery 440 to be detected based on the detection image of the battery 440 to be detected. The operation of the defect detection on the battery 440 to be detected to be performed by the image processing unit 470 may be implemented by means of a defect detection model, an identification algorithm, or the like, which may be selected based on actual applications and needs. Illustratively, to implement defect detection on the battery 440 to be detected, a pre-trained defect detection model may be stored in the image processing unit 470. After the image processing unit 470 acquires the detection image, the detection image is input into the pre-trained defect detection model. The defect detection information of the battery 440 to be detected is acquired through processing by the defect detection model.

In the embodiments of the present application, by identifying the defect in the detection image via the image processing unit 470, the efficiency of defect detection for the battery 440 to be detected can be improved.

The embodiments of the present application provide a battery production device. The battery production device includes the battery detection apparatus 400 according to any one of the above embodiments.

According to the embodiments of the present application, the battery production device includes the battery detection apparatus 400, which can perform non-destructive detection on the batteries 440 to be detected during the production process of the batteries 440 to be detected, to timely identify internal defects of the batteries 440 to be detected, thereby removing unqualified batteries 440 to be detected and improving the quality of the output batteries 440 to be detected.

The battery detection apparatus 400 of the present application is further described below with reference to one specific embodiment.

The battery detection apparatus 400 includes a radiation source 410, a detector 430, a supporting mechanism 420, and an image processing unit. The supporting mechanism 420 includes a clamp 421 and a supporting platform, and the clamp 421 is configured to clamp the battery 440 to be detected. The side edge of the surface 441 of the clamp 421 configured to be in contact with the battery 440 to be detected is provided with a chamfer, and the chamfer is an arc chamfer. The supporting platform includes a limiting block 422, and the limiting block 422 is configured to limit the position of the battery 440 to be detected placed on the supporting platform. Radiation emitted by the radiation source 410 is projected onto the detector 430 through the battery 440 to be detected clamped by the clamp 421, and the detector 430 is configured to acquire a detection image of the battery 440 to be detected based on received radiation 411.

The density ρ₁ of the material of the clamp 421 satisfies: 1.5 g/cm³ < ρ₁ ≤ 1.8 g/cm³. The material of the clamp 421 includes a carbon fiber plate or a high-density sponge. The detector is a flat panel detector, the flat panel detector includes a scintillator layer, and the material of the scintillator layer includes cesium iodide. The thickness H0 of the scintillator layer satisfies: 700 µm ≤ H0 ≤ 800 µm; the pixel size L2 of the flat panel detector satisfies: 100 µm < L2 ≤ 140 µm; and the flat panel detector is an amorphous silicon flat panel detector. The focal spot size L1 of the radiation source satisfies: L1 ≤ 70 µm; the operating voltage V0 of the radiation source satisfies: 150 kv ≤ V0 ≤ 300 kv; and the operating current I0 of the radiation source satisfies: 800 µA ≤ I0 ≤ 1500 µA. The supporting mechanism further includes a supporting platform. The supporting platform is configured to support the battery to be detected, and the density ρ₂ of the material of the supporting platform satisfies: 1.5 g/cm³ ≤ ρ₂ ≤ 1.8 g/cm³.

The battery detection apparatus 400 further includes a driving member, an annular guide rail 460 and a plurality of detection platforms 450. The detection platform 450 is provided with a radiation source 410 and a detector 430. The plurality of detection platforms 450 are spaced apart along the annular guide rail 460, the supporting mechanism 420 is slidably arranged on the annular guide rail 460, and the driving member is configured to drive the supporting mechanism 420 to sequentially slide along the annular guide rail 460 to positions corresponding to the plurality of detection platforms 450. The plurality of detection platforms 450 respectively project the optical axis of the radiation source 410 perpendicularly onto preset positions on two opposite side edges of the surface of a plurality of batteries to be detected on the same surface of the battery 440 to be detected and preset positions in the central area of the battery 440 to be detected to acquire a plurality of initial images. The detection image is acquired based on the plurality of initial images.

FIG. 11 is a flowchart of a detection method of a detection apparatus according to some embodiments of the present application. As shown in FIG. 11, the detection method of the battery detection apparatus 400 includes the following steps:

Step S1101: bright-field and dark-field calibration for flat panel detector: The detector 430 in the battery detection apparatus 400 is calibrated to eliminate residual images and dead pixels in the detector 430, ensuring that the acquired detection image of the battery 440 to be detected is authentic and valid.

Step S1102: measurement system calibration: The radiation source 410, the detector 430, the supporting mechanism 420, and the image processing unit 470 in the battery detection apparatus 400 are calibrated together to ensure that the magnification of the acquired detection image of battery 440 to be detected remains unchanged.

Step S1103: robotic arm automatic material feeding: The battery 440 to be detected is placed on the supporting mechanism 420.

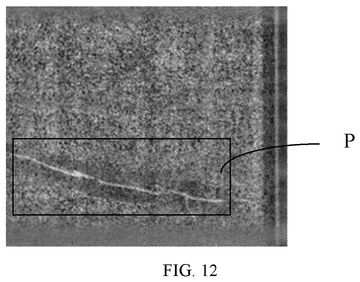

Step S1104: radiation source 410 automatic detection and image saving: Radiation emitted by the radiation source 410 is projected onto the detector 430 through the battery 440 to be detected clamped by the clamp 421, and the detector 430 is configured to acquire the detection image of the battery 440 to be detected based on the received radiation 411. FIG. 12 is a schematic diagram of a detection image of a battery 440 to be detected according to some embodiments of the present application. As shown in FIG. 12, area P in the figure includes defect information of the battery 440 to be detected.

Step S1105: algorithm-based determination: The image processing unit 470 performs defect detection on the battery 440 to be detected based on the detection image to acquire the defect information of the battery 440 to be detected output by the defect detection model.

Step S1106: transferring of OK products and removal of NG products: In response to a detection result of the battery 440 to be detected indicating that the battery 440 to be detected has a defect, the defective battery is removed, while the non-defective battery proceeds to the next step of detection.

Finally, it should be noted that the above embodiments are only used to illustrate the technical solutions of the present application, rather than limit the same. Although the present application has been described in detail with reference to the foregoing embodiments, those of ordinary skills in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery detection apparatus, comprising:
a radiation source;
a detector;
a supporting mechanism, comprising a clamp, wherein the clamp is configured to clamp a battery to be detected, radiation emitted by the radiation source is projected onto the detector through the battery to be detected clamped by the clamp, and the detector is configured to acquire a detection image of the battery to be detected based on received radiation;
a side edge of a surface of the clamp configured to be in contact with the battery to be detected is provided with a chamfer.

2. The battery detection apparatus according to claim 1, wherein the chamfer is an arc chamfer.

3. The battery detection apparatus according to claim 1 or 2, wherein a density ρ₁ of a material of the clamp satisfies: 1.5 g/cm³ ≤ ρ₁ ≤ 1.8 g/cm³.

4. The battery detection apparatus according to claim 3, wherein the material of the clamp comprises a carbon fiber plate or a high-density sponge.

5. The battery detection apparatus according to any one of claims 1 to 4, wherein the detector is a flat panel detector, the flat panel detector comprises a scintillator layer, and a thickness H0 of the scintillator layer satisfies: 700 µm ≤ H0 ≤ 800 µm.

6. The battery detection apparatus according to claim 5, wherein a material of the scintillator layer comprises cesium iodide.

7. The battery detection apparatus according to claim 5 or 6, wherein the flat panel detector is an amorphous silicon flat panel detector.

8. The battery detection apparatus according to any one of claims 5 to 7, wherein a pixel size L2 of the flat panel detector satisfies: L2 > 100 µm.

9. The battery detection apparatus according to claim 8, wherein the pixel size L2 of the flat panel detector satisfies: L2 ≤ 140 µm.

10. The battery detection apparatus according to any one of claims 1 to 9, wherein a focal spot size L1 of the radiation source satisfies: L1 ≤ 70 µm.

11. The battery detection apparatus according to any one of claims 1 to 10, wherein an operating voltage V0 of the radiation source satisfies: 150 kv ≤ V0 ≤ 300 kv.

12. The battery detection apparatus according to any one of claims 1 to 11, wherein an operating current I0 of the radiation source satisfies: 800 µA ≤ I0 ≤ 1500 µA.

13. The battery detection apparatus according to any one of claims 1 to 12, wherein the battery detection apparatus further comprises a moving mechanism and a plurality of detection platforms, each of the plurality of detection platforms is provided with the radiation source and the detector,
the moving mechanism is configured to drive the supporting mechanism to sequentially move to the plurality of detection platforms, the plurality of detection platforms are configured to respectively project an optical axis of the radiation source perpendicularly onto a plurality of target positions on a same surface of the battery to be detected to acquire a plurality of initial images, and the detection image is acquired based on the plurality of initial images.

14. The battery detection apparatus according to claim 13, wherein the plurality of target positions comprise preset positions on two opposite side edges of a surface of the battery to be detected and preset positions in a central area of the battery to be detected.

15. The battery detection apparatus according to claim 13, wherein the moving mechanism comprises a driving member and an annular guide rail, the plurality of detection platforms are spaced apart along the annular guide rail, the supporting mechanism is slidably arranged on the annular guide rail, and the driving member is configured to drive the supporting mechanism to sequentially slide along the annular guide rail to positions corresponding to the plurality of detection platforms.

16. The battery detection apparatus according to any one of claims 1 to 15, wherein the supporting mechanism further comprises a supporting platform, the supporting platform is configured to support the battery to be detected, a density ρ₂ of a material of the supporting platform satisfies: 1.5 g/cm³ ≤ ρ₂ ≤ 1.8 g/cm³.

17. The battery detection apparatus according to claim 16, wherein the supporting mechanism further comprises a limiting block arranged on the supporting platform, and the limiting block is configured to limit a position of the battery to be detected placed on the supporting platform.

18. The battery detection apparatus according to any one of claims 1 to 17, wherein the battery detection apparatus further comprises an image processing unit;
the image processing unit is configured to identify a defect in the detection image.

19. A battery production device, comprising the battery detection apparatus according to any one of claims 1 to 18.
